# EUROPEAN PATENT APPLICATION

(11) **EP 2 418 140 A1**
(43) Date of publication of application: **15.02.2012**
(21) Application number: 10425276.2
(22) Date of filing: 12.08.2010
(51) Int. Cl.: B62B 9/22

(54) **Baby rocking device, for imparting a reciprocating rocking movement to a perambulator, push-chair or the like**

(71) Applicant: Amenduni Gresele, Massimo, 36100 Vicenza (IT)
(72) Inventor: Amenduni Gresele, Massimo, 36100 Vicenza (IT)
(74) Representative: Gallarotti, Franco

(57) **Abstract**

A Baby rocking device, for imparting a cyclic reciprocating rocking movement to a perambulator, push-chair or the like, comprises a wheel support and reception member (2), for receiving and supporting a wheel of the perambulator or push-chair, a track (8) on which a carriage (7) of said member (2) rolls and a support and guide structure (10) incorporating an electric motor for driving the reciprocating movement of a slide (14) on which the abovementioned wheel support and reception member (2) is connected. The track (8) has an uneven profile suitable to impart to the wheel support and reception member (2) a series of slight jumps during the cyclic to and fro movement thereof along the track (8).

## Description

The present invention refers to a baby rocking device, for imparting a reciprocating rocking movement to a perambulator, push-chair or the like, comprising a wheel support and reception member, for receiving and supporting a wheel of the perambulator or push-chair, a track on which said wheel support and reception member is moveable, and a support structure, bearing motor means suitable to impart to the wheel support and reception member a cyclic to and fro movement along said track.

A baby rocking device of the indicated type is for example described in document GB-A-2 231 005.

The object of the present invention is that of providing a device of the abovementioned type having an extremely simple and reliable structure and which also attains an ideal rocking movement.

With the aim of attaining such aim, the invention has the object of a device having all the characteristics indicated above and further characterised in that:
- said wheel support and reception member is rigidly connected to a slide slidably mounted on a longitudinal guide defined by the abovementioned support structure,
- the abovementioned slide is driven by the abovementioned motor means through a nut and screw transmission,
- the abovementioned wheel support and reception member is provided with wheels or rollers for rolling on the abovementioned track,
- the abovementioned track has an uneven profile suitable to impart to said wheel support and reception member a series of slight jumps during the cyclic to and fro movement thereof along the track.

Due to the abovementioned characteristics, the device according to the invention is easy construction-wise and simultaneously extremely reliable operation-wise. Furthermore, the attainment of the jump movement of the wheel support and reception member allows perfecting the rocking effect, adding a series of cadenced slight jumps to the to and fro movement of the push-chair or perambulator.

A further and preferred characteristic of the device according to the invention lies in the fact that the abovementioned wheel support and reception member is further provided with a lock device, for locking the wheel received thereon.

In a preferred embodiment, the uneven profile of the track is defined by a plurality of inserts prearranged in the abovementioned track and each switchable between an operative condition, in which the insert defines a slight bump, and an inoperative condition, in which the insert defines a flat surface flushed with the track.

In a variant, the track is shaped having a non-modifiable uneven profile.

Further characteristics and advantages of the invention shall be clear from the description that follows with reference to the attached drawings, provided purely by way of non-limiting example, wherein:
- figure 1 is a perspective view of an embodiment of the baby rocking device according to the invention,
- figure 2 is a further perspective view of the device of figure 1 showing a wheel of a push-chair received on the wheel support and reception member which is part of the device, and
- figures 3, 4 are perspective views of the module of the device which serves as a guide for the wheel support and reception member and which contains the apparatus for driving and controlling the movement of said member.

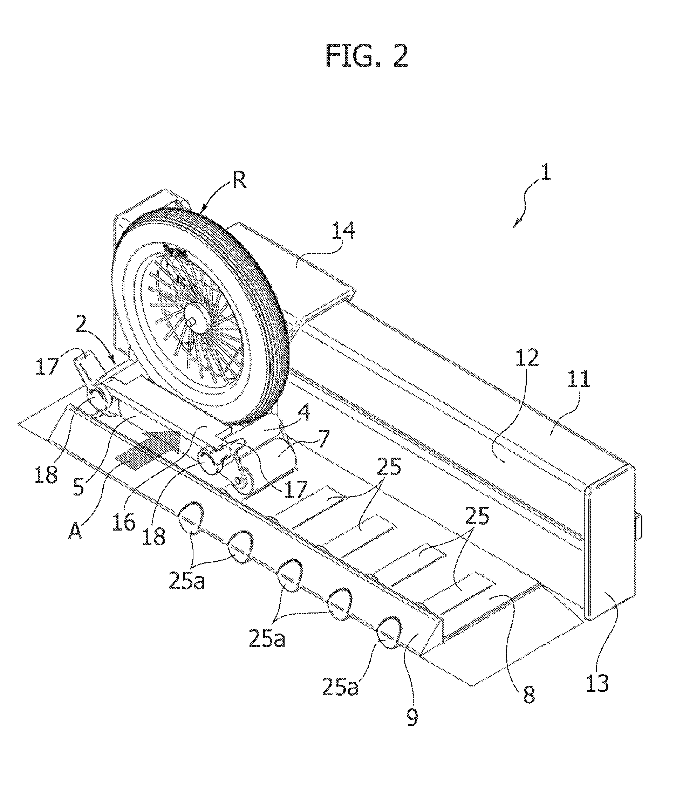

In the drawings, reference number 1 indicates - in its entirety - a baby rocking device prearranged to be placed on a floor and including a wheel support and reception member 2 intended for receiving and supporting, (as observable in figure 2) one of the wheels R of un push-chair, a perambulator or the like. For the sake of simplicity of the drawing and in order to provide a clearer view of the structure of the device according to the invention, figure 2 illustrates the wheel R received on the member 2 alone, without illustrating the entire remaining part of the push-chair and the other wheels, which are obviously intended to lie against the ground.

As it shall be clear from the description that follows, the device is capable of imparting a cyclic to and fro movement to the reception and support member 2 so as to force the push-chair or the perambulator to move by an equivalent reciprocating motion, by rolling on the floor through the other wheels thereof.

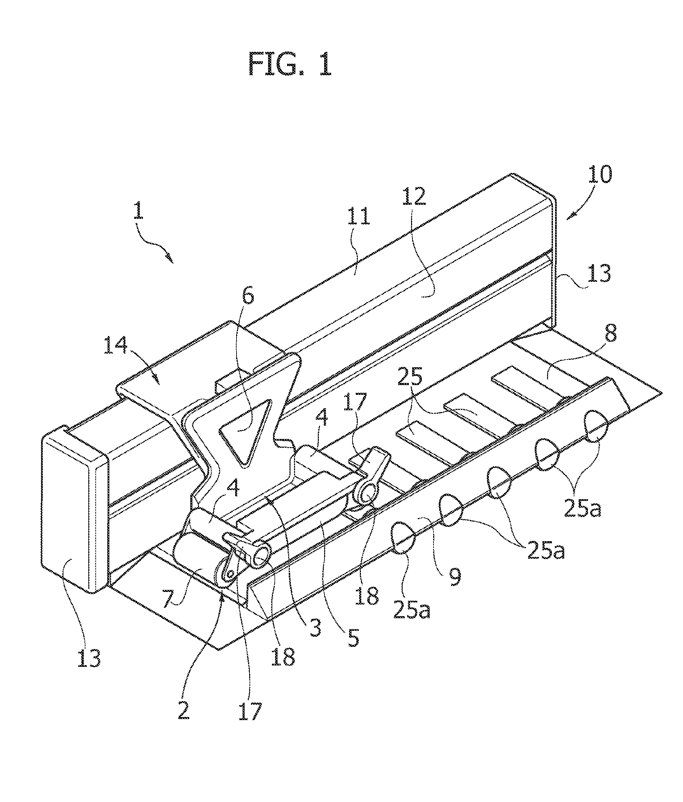

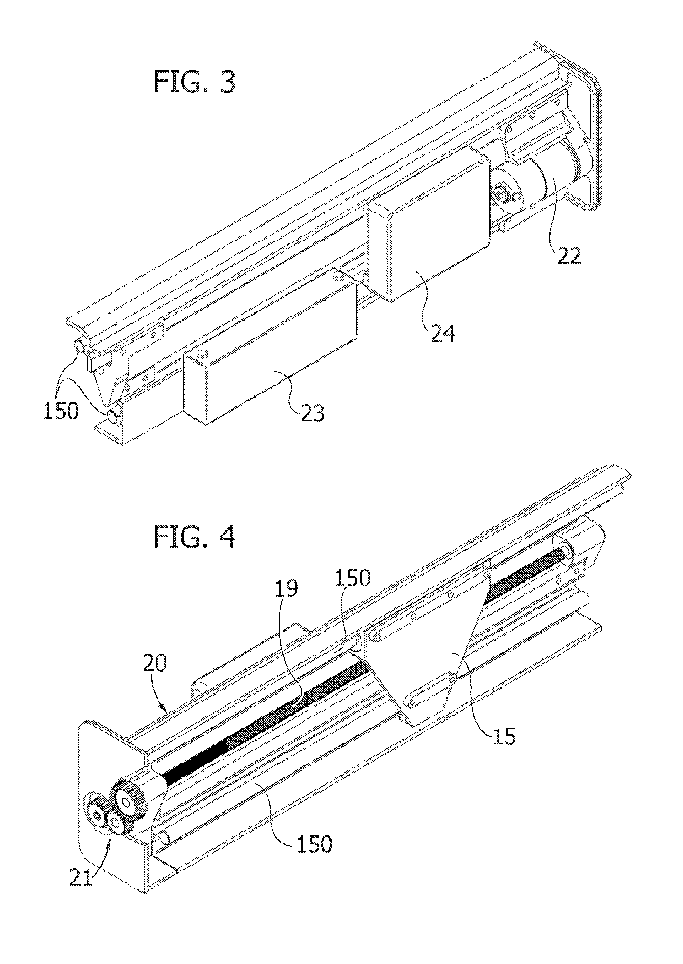

As observable in figure 1, the wheel reception and support member 2 comprises a receptacle structure having a bottom wall 3, two sides 4 in form of cylindrical elements having a ribbed or knurled surface for facilitating high friction with the tread of the wheel R, a low front wall defined by a plate 5, and a rear backrest-like wall 6 projecting upwards, which in the illustrated example has a substantially triangular-shaped template. Two rollers 7, which constitute the carriage of the member 2 and which are intended to roll on a longitudinal track 8 which lies on the floor are mounted rotatably free between the front plate 5 and the rear wall 6, adjacent to the two lateral cylindrical elements 4. The track 8 is delimited by a lateral bar 9 on one side and by a module 10 in form of a longitudinal beam on the other side. The casing of the module 10 has an upper surface 11, two longitudinal lateral surfaces 12 and two end surfaces 13. The module 10 serves as a longitudinal guide for a slide 14 having a vertical wall 15 (figure 4) which in the illustrated example has a substantially triangular shape, onto which the rear wall 6 of the wheel reception and support member 2 is fixed, for example by means of screws.

Still referring to figures 1,2, when a wheel R is received on the member 2, it may be locked transversely through a lock member 16 constituted by a plate made of any material suitable to be pressed in the direction indicated in the arrow A in figure 2 against the wheel R through a pair of hand levers 17 integral with screw elements engaged in threaded holes of the cylindrical elements 4 and having heads 18 which press the plate 16 against the wheel R. The plate 16 is supported by the same screw elements, which traverse the through holes made in two lateral flanges of such plate.

Referring to figures 3,4, the movement of the slide 14 is driven by a threaded stem 19 which is rotatably mounted in the bearing structure 20, constituted for example by an extruded aluminium section, arranged inside the casing of the module 10. The threaded stem 19 engages a nut element (not shown in the drawings) which is borne by the inner face of the wall 15 of the slide. The stem 19 is also rotated through a gear transmission 21 prearranged at an end head of the module 10 by an electric motor 22 which is supplied electrically through a power supply battery 23 also prearranged in the module 10 (see figure 3) through an electronic control unit 24 (figure 3) also prearranged in the module 10. The device naturally comprises stop switches for inverting the direction of rotation of the engine 22 at the end of each to and fro stroke of the slide 15. Thus, the module 10 is capable of driving and guiding a reciprocating cyclic movement, to and fro, of the slide 14 and hence of the wheel reception and support member 2. The wall 15 of the slide is also slidably guided, through the engagement of two bushings borne thereby (not shown in the drawings) on two cylindrical guide bars 150 fixed to the bearing structure of the module 10 (see figure 4).

As clearly observable in figures 1,2, the track 8 on which the rollers 7 of the member 2 roll is prearranged with a plurality of inserts 25 distributed having a constant pitch along the track 8 and each extended transversely with respect to the longitudinal direction of the track 8. Each insert is constituted by a substantially half-circle-shaped transverse section profile, having a flat base. Each insert has an end 25a projecting on the outer side of the bar 9 which is seizable and rotatable by 180° to switch the insert between an operative condition, in which the insert defines a slight bump on the rolling surface of the track, and an inoperative condition, in which the insert defines a flat surface flushed with the track 8. Thus, the track 8 may be configured having a variable profile and in particular with a profile having a succession of bumps which impart a series of slight jumps to the carriage of the member 2 and hence to the wheel R during the to and fro movement driven by the module 10.

Therefore, the device according to the invention is not only capable of imparting to the push-chair or to the perambulator an automatic to and fro movement to obtain a rocking effect, but it is also capable of improving such effect by imparting a regular series of slight jumps to the vehicle subjected to movement.

As observable from the description outlined above, the device according to the invention is further characterised by the particular system for locking the wheel R on the wheel support and reception member 2, which guarantees the reliable operation of the device and obtaining the desired effect.

In a variant, the track 8 is not provided with the inserts 25 and it is configured - right from the origin - having any predetermined and non-modifiable uneven profile.

Naturally, without prejudice to the principle of the invention, the construction details and the embodiments may widely vary with respect to what has been described and illustrated purely by way of example, without departing from the scope of protection of the present invention.

## Claims

1. Baby rocking device, for imparting a cyclic reciprocating rocking movement to a perambulator, push-chair or the like, said device comprising:
- a wheel support and reception member (2), for receiving and supporting a wheel (R) of the perambulator or push-chair,
- a track (8) on which said wheel support and reception member (2) is moveable,
- a support structure (10) bearing motor means (22, 21) suitable to impart to the wheel support and reception member (2) a cyclic to and fro movement along said track,
- said device being **characterised in that**:
- said wheel support and reception member (2) is rigidly connected to a slide (14) slidably mounted on a longitudinal guide (10) defined by said support structure,
- said slide (14) is driven by said motor means (22, 21) through a screw and nut transmission (19),
- said wheel support and reception member (2) is provided with wheels or rollers (7) for rolling on said track (8),
- said track (8) has an uneven profile suitable to impart to said wheel support and reception member (2) a series of slight jumps during the cyclic to and fro movement thereof along the track (8).

2. Baby rocking device according to claim 1, **characterised in that** said wheel support and reception member (2) is provided with a lock device (16, 17, 18) for locking the wheel (R) received on said wheel support and reception member (2).

3. Baby rocking device according to claim 2, **characterised in that** said lock device comprises a plate (16) borne by the structure of said wheel support and reception member (2) and fastenable through screw means (17, 18) against said wheel (R) to lock it transversely against a rear wall (6) of said wheel support and reception member (2).

4. Baby rocking device according to claim 1, **characterised in that** the uneven profile of said track (8) is constituted by a plurality of inserts (25) prearranged on said track (8).

5. Baby rocking device according to claim 4, **characterised in that** each of said inserts (25) is switchable between an operative condition, in which it defines a slight bump on the track (8), and an inoperative condition in which it defines a flat surface portion flushed with the track (8).

6. Baby rocking device according to claim 1, **characterised in that** said uneven profile is defined by a surface having a predetermined and non-modifiable profile of the track (8).
